# EUROPEAN PATENT SPECIFICATION

(11) **EP 1 815 954 B1**
(45) Date of publication and mention of the grant of the patent: **10.09.2008**
(21) Application number: 07101662.0
(22) Date of filing: 02.02.2007
(51) Int. Cl.: B27C 9/04, B27G 21/00, B23Q 1/01

(54) **A machine for processing wooden components or the like**
Maschine zur Bearbeitung von Holzteilen oder Ähnlichem
Appareil pour traiter les composés en bois ou similaires

(30) Priority: 03.02.2006 IT BO20060060
(43) Date of publication of application: 08.08.2007
(73) Proprietor: BIESSE S.p.A., 61100 Pesaro (IT)
(72) Inventor: Bernardi, Paolo, 47841, Cattolica (IT)
(74) Representative: Jorio, Paolo

(56) References cited:
- EP-A1- 1 247 611
- EP-A2- 0 922 547
- DE-A1- 19 518 965
- GB-A- 2 271 947

## Description

The present invention relates to a machine for processing wooden components or the like according to the preamble of claim 1 (see e.g. EP-A-0 922 547).

In the field of wooden components processing, it is known to provide a machine comprising an elongated base, extending in a first determined direction, having a pair of guiding longitudinal members, and supporting a plurality of crossbars which extend between the aforementioned longitudinal members in a second direction transversal to the first direction, are slidingly coupled to the longitudinal members themselves, are arranged at a determined distance one from the other so as to define therebetween openings adapted to allow woodchips and processing trimmings to fall, and are each provided with at least one supporting member for at least one component to be processed.

The machine further comprises a travelling crane in turn comprising a substantially vertical upright slidingly coupled with the base to perform straight movements in the aforementioned first direction, and a horizontal crossbar which is connected to the free end of the upright and extends above the base in the aforementioned second direction.

The crossbar of the travelling crane is laterally limited in the first direction by two flat faces opposite to one another, which are substantially orthogonal to the first direction and each of which supports a corresponding operating unit for processing the components. The operating unit is slidingly coupled with the crossbar of the travelling crane to perform straight movements in the aforementioned second direction, and is normally provided with at least an electro-spindle having a determined longitudinal axis.

Since the two operating units are fitted on the opposite side faces of the crossbar of the travelling crane, the known machines of the above-described type for processing wooden components have some drawbacks substantially deriving from the fact that the two electro-spindles display a relatively high axle spacing measured parallelly to the aforementioned first direction. Accordingly, in order to process a component by means of two tools fitted on the two electro-spindles, the travelling crane must perform relatively broad movements in the aforementioned first direction, thus considerably reducing the productivity of the known machines of the above-described type.

Furthermore, since each operating unit must be provided with a plurality of flexible protection means arranged around the operating unit itself, in order to prevent the woodchips and the processing trimmings from being dispersed and the duty crew from accessing the working spaces of the two operating units, the fitting of the operating units on the opposite side faces of the crossbar of the travelling crane implies the further drawback consisting in that each operating unit requires a structure for supporting the corresponding flexible protection members, and in that the travelling crane consequently has a relatively large size in the aforementioned first direction.

It is an object of the present invention to provide a machine for processing wooden components or the like designed to eliminate the aforementioned drawbacks.

According to the present invention, there is provided a machine for processing wooden components or the like as claimed in the accompanying claims.

A non-limiting embodiment of the present invention will be described by way of example with reference to the accompanying drawings, in which:
Figure 1 is a schematic perspective view of a preferred embodiment of the machine of the present invention;
Figure 2 is a schematic plan view of the machine in Figure 1; and
Figure 3 is a schematic perspective view of a detail of the machine in Figures 1 and 2.

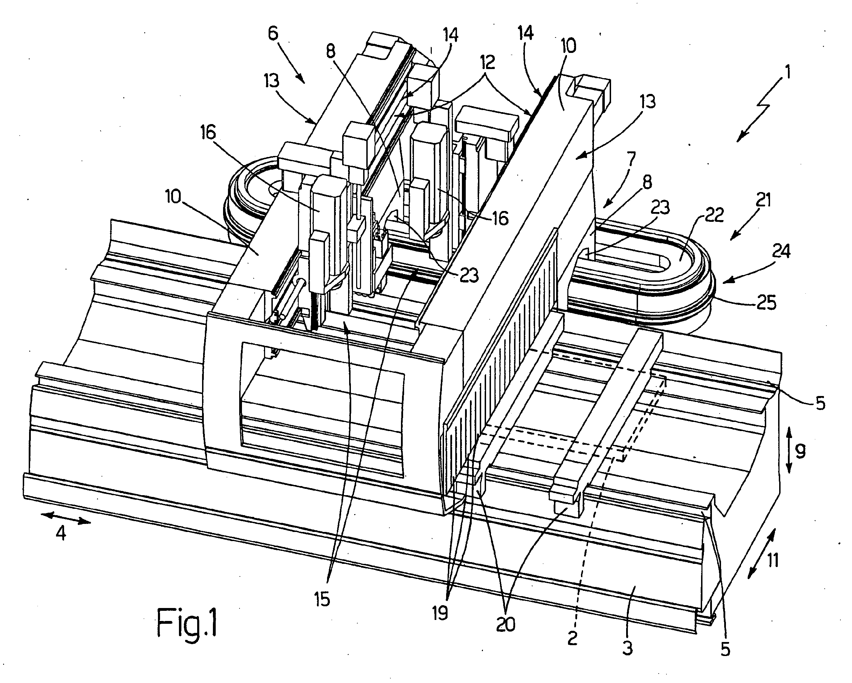

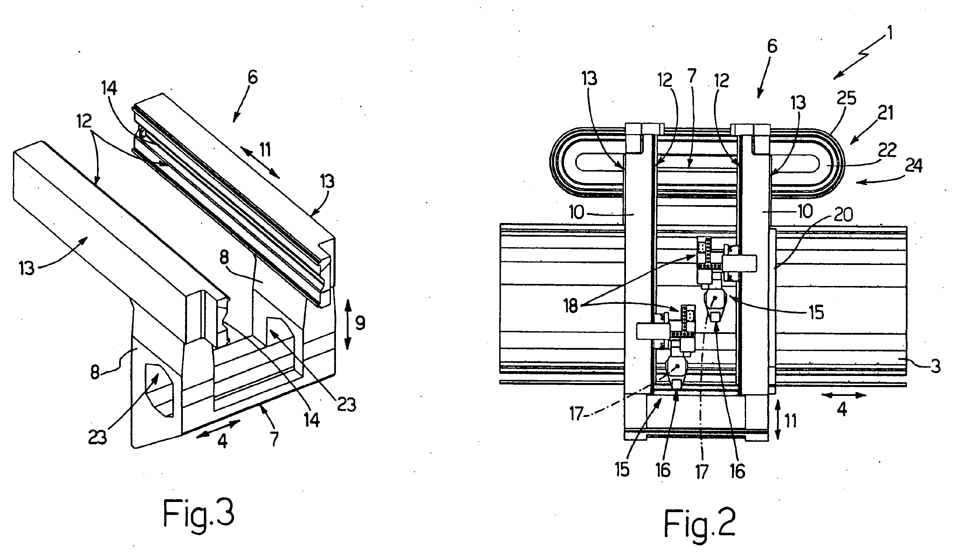

With reference to Figures 1 and 2, number 1 indicates, as a whole, a machine for processing wooden components 2 or the like comprising an elongated base 3 which extends in a determined direction 4, is essentially U-shaped, and has two side longitudinal members 5 parallel to the direction 4 itself.

The machine 1 further comprises a travelling crane 6 in turn comprising a vertical upright 7 (Figures 1 and 3), which is coupled in a known manner to the base 3 to perform straight movements in the direction 4 along the base 3 itself and under the bias of a known and not shown operating device, substantially has the shape of a fork, and comprises two arms 8 essentially parallel to one another and to a direction 9 vertical and transversal to the direction 4.

At their free ends, the two arms 8 carry two crossbars 10 connected thereto and substantially parallel to one another, each of which extends above the base 3 in a direction 11 horizontal and orthogonal to the directions 4 and 9, and is limited in the direction 4 by two substantially flat faces 12, 13 opposite to one another and orthogonal to the direction 4 itself.

The face 12 of each crossbar 10 faces the face 12 of the other crossbar 10, is provided with a guide 14 extending in the direction 11, and supports an operating head 15 coupled to the guide 14 in a known manner to perform straight movements in the direction 11 along the corresponding crossbar 10. The head 15 comprises at least one electro-spindle 16, which has a longitudinal axis 17 parallel to the direction 9, and is mounted on the operating head 15 in a known manner to move in the direction 9 itself, and a drilling unit 18 of a known type.

Each crossbar 10 extends above and at a determined distance from base 3 and is provided with a plurality of flexible protection members 19 which downwardly protrude from the crossbar 10 itself, are juxtaposed to one another in the direction 11, define along with the flexible members 19 of the other crossbar 10 a working space 10 within which the components 2 are processed by the heads 15, and are adapted to prevent the woodchips and the processing trimmings from being dispersed and the duty crew from accessing the working space of the heads 15.

The machine 1 is further provided with a plurality of crossbars 20, indicated in the following by the expression "working plans", each of which extends between the longitudinal members 5 and in the direction 11 and is slidingly coupled to the longitudinal members 5 to be displaced along the longitudinal members 5 themselves in the direction 4 either manually or by means of a known and not shown operating device. Each working plan 20 supports at least one supporting block (not shown), which defines, along with the supporting blocks (not shown) of the other working plans 20, a supporting plan on which at least one component 2 is positionable.

The machine 1 further comprises a tool-holder storage 21, in turn comprising a supporting annular plate 22 which is connected to the upright 7 and extends through two slots 23 (Figure 3) made through the arms 8 parallelly to the direction 4, and a tool-holder conveyor 24 defined by a conveying belt 25 which is endless about the periphery of the plate 22, has a conveying branch extending through the slots 23 parallelly to the direction 4, and is provided with a plurality of tool-holder members (not shown) evenly distributed along the belt 25 itself.

From that set forth above there follows that the crossbars 10 and the storage 21 are movable in the direction 4 by corresponding laws of motion identical to one another.

The machine 1 has some advantages substantially deriving from the fact that the fitting of the operating heads 15 on the reciprocally opposing faces 12 of the crossbars 10 allows to obtain:
a relatively reduced distance between the axes 17 of the electro-spindles 16 measured parallelly to the direction 4; and
a relatively reduced size of the travelling crane 6 in the direction 4 since the flexible protection members 19 are directly connected to the two crossbars 10.

## Claims

1. A machine for processing wooden components (2) or the like, the machine comprising an elongated base (3) extending in a first determined direction (4); supporting means (20) for at least one component (2); a travelling crane (6) slidingly coupled to the base (3) for performing straight movements in said first direction (4); and two operating units (15) fitted on the travelling crane (6) for processing the components (2); and being **characterised in that** the travelling crane (6) comprises two crossbars (10) substantially parallel to one another which extend above the base (3) in a second direction (11) transversal to the first direction (4), are movable in said first direction (4) by corresponding laws of motion identical to one another, and are each laterally limited by a corresponding face (12) facing the other crossbar (10); each operating unit (15) being fitted on one corresponding said face (12).

2. A machine according to claim 1, wherein the travelling crane (6) further comprises an upright (7) extending in a third direction (9) substantially orthogonal to said first and second directions (4,11); said crossbars (10) protruding from the upright (7) towards said second direction (11).

3. A machine according to claim 1 or 2 and further comprising at least one storage (21) provided with a plurality of tool-holder members and fitted on the travelling crane (6) for performing movements towards said first direction (4) by the same law of motion of said crossbars (10).

4. A machine according to claim 3, wherein the travelling crane (6) further comprises at least one upright (7) for supporting the crossbars (10) which is slidingly coupled to the base (3); the storage (21) comprising an endless conveyor (24) which carries said tool-holder members connected thereto and comprises a conveying branch extending through the upright (7) parallelly to said first direction (4).

5. A machine according to any of the preceding claims, wherein said crossbars (10) extend above and at a determined distance from said base (3), and carry protection means (19) connected thereto and downwardly protruding, in use, from the crossbars (10) for limiting in said first direction (4) a working space within which the components (2) are processed by the two operating units (15).

6. A machine according to claim 5, wherein said protection means (19) comprise a corresponding plurality of flexible members (19) for each crossbar (10), which are juxtaposed to one another in said second direction (11) and downwardly protrude, in use, from the crossbar (10) itself to limit said working space.

## Patentansprüche

1. Eine Maschine zum Bearbeiten hölzerner Komponenten (2) oder ähnlichem, die Maschine umfasst
eine längliche Basis (3) die sich in eine erste vorgegebene Richtung (4) erstreckt,
Unterstützungsmittel (20) für mindestens eine Komponente (2),
einen fahrbaren Kran (6) der gleitend mit der Basis (3) verbunden ist, um gerade Bewegungen in die erste Richtung (4) durchzuführen und
zwei Betriebseinheiten (15) die auf dem fahrbaren Kran (6) zum Bearbeiten der Komponenten (2) angeordnet sind, **dadurch gekennzeichnet, dass**
der fahrbare Kran (6) zwei Querbalken (10) umfasst, die im Wesentlichen parallel zueinander sind und die sich über der Basis (3) in eine zweite Richtung (11), quer zur ersten Richtung (4), erstrecken, während
die Querbalken in der ersten Richtung (4) durch entsprechende Gesetze der Bewegung identisch zueinander bewegbar sind und
jeder der Querbalken seitlich durch eine entsprechende Fläche (12) begrenzt ist, die dem anderen Querbalken (10) gegenüberliegt, und dass
jede Betriebseinheit (15) auf einer entsprechenden Fläche (12) angeordnet ist.

2. Eine Maschine gemäß Anspruch 1, in der der fahrbare Kran (6) weiterhin einen Pfosten (7) umfasst, der sich in eine dritte Richtung (9) erstreckt, die im Wesentlichen rechtwinklig zur ersten und zweiten Richtung (4, 11) ist, und
die Querbalken (10) von dem Pfosten (7) in Richtung der zweiten Richtung (11) vorstehen.

3. Eine Maschine gemäß Anspruch 1 oder 2 und weiterhin umfassend mindestens ein Lager (21), das mit einer Mehrzahl von Werkzeughalteelementen ausgestattet und auf dem fahrbaren Kran (6) angeordnet ist, um Bewegungen in Richtung der ersten Richtung (4) durch dasselbe Gesetz der Bewegung wie bei den Querbalken (10) durchzuführen.

4. Eine Maschine gemäß Anspruch 3, in der der fahrbare Kran (6) weiterhin umfasst
mindestens einen Pfosten (7) zum Unterstützen der Querbalken (10) der gleitend mit der Basis (3) verbunden ist, während
das Lager (21) ein Endlosfördermittel (24) umfasst, das die damit verbundenen Werkzeughalteelemente trägt und einen Förderzweig umfasst, der sich durch den Pfosten (7) parallel zur ersten Richtung (4) erstreckt.

5. Eine Maschine gemäß einem der vorhergehenden Ansprüche, in der die Querbalken (10) sich über und in einem vorgegebenen Abstand zu der Basis (3) erstrecken und Schutzmittel (19) tragen, die damit verbunden sind und sich während des Gebrauchs von dem Querbalken (10) aus nach unten erstrecken, um einen Arbeitsbereich in der ersten Richtung (4) zu begrenzen, innerhalb dessen die Komponenten (2) durch die zwei Betriebseinheiten (15) bearbeitet werden.

6. Eine Maschine gemäß Anspruch 5, in der die Schutzmittel (19) eine entsprechende Mehrzahl von flexiblen Elementen (19) für jeden Querbalken (10) umfassen, die jeweils in der zweiten Richtung (11) nebeneinander gestellt sind und sich während des Gebrauchs von dem Querbalken (10) selbst aus nach unten erstrecken, um den Arbeitsbereich zu begrenzen.

## Revendications

1. Machine pour traiter des composants en bois (2) ou similaires, la machine comprenant une base allongée (3) s'étendant dans une première direction déterminée (4) ; des moyens support (20) pour au moins un composé (2) ; un pont-roulant (6) couplé par coulissement à la base (3) pour exécuter des mouvements rectilignes dans ladite première direction (4) ; et deux unités de manoeuvre (15) montées sur le pont-roulant (6) pour traiter les composés (2) ; et **caractérisée en ce que** le pont-roulant (6) comprend deux traverses (10) sensiblement parallèles entre elles, qui s'étendent au-dessus de la base (3) dans une seconde direction (11) transversale à la première direction (4), sont déplaçables dans ladite première direction (4) par des lois du mouvement correspondantes identiques entre elles, et sont chacune limitées latéralement par une face correspondante (12) opposée à l'autre traverse (10) ; chaque unité de manoeuvre (15) étant montée sur une dite face correspondante (12).

2. Machine selon la revendication 1, dans laquelle le pont-roulant (6) comprend, en outre, un montant (7) s'étendant dans une troisième direction (9) sensiblement orthogonale auxdites première et seconde directions (4, 11) ; lesdites traverses (10) faisant saillie du montant (7) vers ladite seconde direction (11).

3. Machine selon la revendication 1 ou 2 et comprenant, en outre, au moins un magasin (21) pourvu d'une pluralité d'éléments porte-outils et fixé sur le pont-roulant (6) pour exécuter des mouvements vers ladite première direction (4) selon une loi de mouvement identique à celle des traverses (10).

4. Machine selon la revendication 3, dans laquelle le pont-roulant (6) comprend, en outre, au moins un montant (7) pour supporter les traverses (10), lequel est couplé par coulissement à la base (3) ; le magasin (21) comprenant un convoyeur sans fin (24) qui transporte lesdits éléments porte-outils reliés à celui-ci et présente une branche de transport s'étendant à travers le montant (7) dans une direction parallèle à ladite première direction (4).

5. Machine selon l'une quelconque des revendications précédentes, dans laquelle lesdites traverses (10) s'étendent au-dessus et à une distance définie de ladite base (3), et portent des moyens de protection (19) qui y sont reliés et qui, en cours d'utilisation, font saillie vers le bas des traverses (10) pour limiter, dans ladite première direction (4), un espace de travail à l'intérieur duquel les composants (2) sont traités par les deux unités de manoeuvre (15).

6. Machine selon la revendication 5, dans laquelle lesdits moyens de protection (19) comprennent une pluralité correspondante d'éléments flexibles (19) pour chaque traverse (10), qui sont juxtaposés les uns aux autres dans ladite seconde direction (11) et font saillie vers le bas, en cours d'utilisation, de la traverse (10) elle-même pour limiter ledit espace de travail.
